(19) Europäisches Patentamt

European Patent Office

Office européen des brevets

(11) Publication number: **0 063 462**
**B1**

(12) **EUROPEAN PATENT SPECIFICATION**

(45) Date of publication of patent specification: 20.11.86

(21) Application number: **82301900.5**

(22) Date of filing: **13.04.82**

(51) Int. Cl.⁴: **B 29 C 51/26**

(54) Thermoforming apparatus.

(30) Priority: **15.04.81 GB 8111984**

(43) Date of publication of application:
**27.10.82 Bulletin 82/43**

(45) Publication of the grant of the patent:
**20.11.86 Bulletin 86/47**

(84) Designated Contracting States:
**AT BE CH DE FR GB IT LI LU NL SE**

(56) References cited:
**DE-A-2 636 463**
**DE-U-1 997 474**
**DE-U-7 301 715**
**DE-U-7 439 125**
**DE-U-8 005 873**
**FR-A-1 112 634**
**GB-A-2 045 725**
**US-A-3 228 066**

(73) Proprietor: **M.L. SHELLEY & PARTNERS
LIMITED
Stonehill, Stukeley Meadows Industrial Estate
Huntingdon Cambridgeshire PE18 6DR (GB)**

(72) Inventor: **Perryman, Leslie M. c/o M.L. Shelley &
Partners
Stonehill Stukeley Meadows Industrial Estate
Huntingdon Cambridgeshire PE18 6DR (GB)**

(74) Representative: **Woodin, Anthony John et al
Fitzpatricks Kern House 61/62 Lincoln's Inn
Fields
London WC2B 6EX (GB)**

Courier Press, Leamington Spa, England.

## Description

The invention relates to apparatus in which a sheet of thermoplastic material is softened and formed in a mould usually with the aid of a vacuum and/or fluid under pressure.

It is known to provide a single station thermoforming machine in which plastics sheet is loaded into the machine at the single working station and in which heaters can be moved into and out of the station to heat and soften the sheet while it is firmly clamped along all four edges in the station, the softened sheet subsequently being formed in the station and, after cooling, removed from the machine. With such a single station machine, because the sheet can be firmly clamped along all four edges and because it is possible to make the mould box an air tight chamber closed by the plastics sheet, it is possible to control sag in the sheet by adjusting the air pressure in the chamber. A single station machine is thus versatile in that it can cope with any mouldable thermoplastics material but it suffers from the disadvantage that it is slow in operation.

To speed-up the production cycle various high speed thermoforming machines have been proposed. One known high speed machine is a "shuttle" type machine which comprises a central forming station having heating stations on opposite sides of the forming station.

With such a machine, while one sheet is being heated in one of the heating stations, another sheet can be formed, unloaded and a fresh sheet loaded in the forming station. With a shuttle-type machine, not only is it the case that the heaters can only operate alternately so that they are idle for half of their working life but also it is the case that the speed of the machine is still usually governed by the period of time necessary to heat the sheet.

Rotary thermoforming machines are also known, and a three station rotary machine comprises a loading and unloading station, a heating station and forming station.

Since the sheet heating time is still critical with such a machine it is also known to provide a four station rotary machine, the extra station being a second sheet heating station. Four station rotary machines are relatively fast in operation but are complicated and thus expensive and are difficult to automate.

The extra expense is accounted for, at least in part, by the fact that each station must have its own sheet clamping frame and the difficulty in automation arises at least partly in the loading of sheet and unloading of the finished article. Normally such machines are loaded and unloaded manually.

To avoid at least some of the problems of these known machines it has been proposed to provide a so-called "in-line" machine in which the sheet is fed successively between loading, heating, forming and unloading stations arranged in a rectilinear array. Such a machine is capable of rapid operation since it can have as many heating stations as are required and of automatic loading and unloading but suffers from the disadvantage that hitherto it has not proved practical to maintain the sheet clamped on all four sides during its heating and during its transfer from the heating station to the forming station. Although it is theoretically possible to have an in-line machine consisting of a series of sheet clamping frames travelling in a closed loop, such a machine would be excessively expensive due to the large number of clamping frames which would be required. Also the time taken to adjust the clamping frames to cater for different sizes of plastics sheet would be unacceptably increased.

Thus for example DE—U—7 301 715 of Adolf Illig Maschinenbau describes an automatic in-line thermoplastic sheet forming machine comprising a feeding station, a heating station and a forming station and conveying means for conveying sheet plastics material between the stations. The machine is characterised by means for clamping and conveying the plastics sheet by two opposed side edges and by a clamping frame disposed in the heating station and adapted to hold the plastics sheet on all sides during heating.

During the transfer the softened sheet tends to distort both due to sagging under gravity and/or due to an inherent tendency of plastics sheet to change shape when heated. As a result the conventional practice with in-line machines is to start with sheets which in their cold state are considerably larger than the finished article to allow for the shrinkage. While this was acceptable when the cost of plastics material was relatively low it is becoming increasingly less acceptable as time goes by especially since most plastics are based on oil.

At the heating station it is conventional to provide upper and lower heaters for example, infra-red quartz electric heaters which apply heat to the sheet until the plastics softens. It is known for the elements to be arranged in arrays on either side of the sheet and powered so that a predetermined pattern of heat is applied to the sheet in accordance with the shape of the article to be formed; thus where greatest forming of the thermoplastic material is required, these areas will be heated most and conversely for areas where little or no forming is required. This depends on each heating element being set to give a preset power output in accordance with the heating pattern to be applied to the thermoplastic sheet. With such preset power outputs heating of the thermoplastic sheet must be such as to avoid overheating the sheet locally and when thick thermoplastic sheets require to be formed, the time taken to heat the sheet determines the rate at which the thermoformings are produced. This limitation may therefore result in a higher cost per article produced.

It is furthermore a disdvantage of some plastics materials that they possess a very low hot strength and thus are difficult or impossible to thermoform on conventional high speed in-line apparatus, since during the transfer of the sheet it will tend to collapse.

It is an object of the invention to provide improved thermoforming apparatus.

From one aspect the invention provides apparatus for thermoforming sheet plastics material, of the kind having a heating station and forming station arranged in line, means for conveying sheets between the heating and forming stations and upper and lower heaters in the heating stations, characterised by means for moving one of the heaters between the heating station and the forming station sheet gripping means on the movable heater, the movable heater being arranged to travel with the heated sheet during its conveyance between the heating and forming stations, and the sheet gripping means on the movable heater being arranged to cooperate during the conveyance of the sheet with sheet gripping means on the means for conveying the sheets between the heating and forming stations whereby during its conveyance the sheet can be gripped around substantially the whole of its periphery to prevent shrinkage of the sheet. Preferably the upper heater is the movable heater. The upper heater may be in the form of a chamber which is adapted to be closed by the sheet, the arrangement being such that the air pressure in the chamber can be varied to control sag in the sheet. Means is preferably provided for sealing the marginal portion of the sheet against the heater chamber, and preferably the sheet sealing means and the sheet gripping means are combined in a continuous vacuum seal.

The apparatus may comprise a sheet loading station, an unloading station, and the means for conveying the sheet to be formed between the stations may comprise a guide track extending between the stations, a carriage on the guide track, sheet gripper means on the carriage, the carriage being movable between adjacent stations whereby the sheet can be moved step-wise between the stations. Preferably the guide track is pivoted at one end for vertical movement, means being provided for moving the guide track about its pivot to provide clearance to enable the sheet to be advanced between successive stations.

It may be possible to replace the conveying means described above by conveying means comprising feed chains formed for example with spikes for engaging and gripping the sheets or by conveying means comprising pairs of contra-rotating belts between which the sheets are gripped.

Advantageously the apparatus comprises means for controlling the heaters for applying heat at a given level to the material from a heat source of low thermal inertia, means for sensing the temperature of the sheet material and means for successively or continuously reducing the level of heat applied to the material as the temperature of the material rises. The heat sensing means may be connected to a microprocessor control unit and said heating control means may be connected to the microprocessor control unit, said microprocessor control circuit preferably have data storage means connected therewith, and data corresponding to a predetermined temperature response of the material being heated stored in said storage means whereby, in use, the heating of said array of elements and the monitoring of the temperature is carried out in accordance with said predetermined temperature response and the monitored temperature.

Advantageously the apparatus comprises infra-red quartz electric heaters of low thermal inertia. Preferably the heat sensing means is a non-contact infra-red pyrometer. Preferably the heating control devices are triacs.

From another aspect the invention is a method of thermoforming sheet plastics material of the kind comprising heating a plastics sheet in a heating station, conveying the plastics sheet to a forming station and forming the plastic sheet in the forming station, characterised by the step of heating the sheet while it is being conveyed between the heating and forming stations and by the step of gripping the sheet around substantially the whole of its periphery while it is being conveyed between the heating and forming stations. Preferably the method comprises applying heat at a given level to the sheet material from a heat source of low thermal inertia and successively or continuously reducing the level of heat applied to the sheet material as the temperature of the material rises.

Advantageously the heat source comprises one or more infra-red quartz electric resistance heaters.

Preferably the method comprises continuously monitoring the temperature of the sheet material at at least one location e.g. by means of an optical pyrometer.

The method may comprise monitoring the mains voltage to the heating source and applying compensation if necessary to avoid unintended fluctuations in the level of heating energy applied to the sheet material. Preferably the method comprises initially applying maximum heat available to the sheet material, monitoring the temperature of the sheet material, comparing the monitored temperature of the sheet material with the temperature of a predetermined temperature response of the same sheet material, and controlling the heat applied to the sheet material in accordance with the predetermined temperature response and in accordance with the monitored temperature so that the thermoplastic sheet material is brought into a suitable condition to be thermoformed. Preferably the method comprises sensing when the sheet material is suitable for thermoforming and removing the material from the applied heat.

The invention is diagrammatically illustrated by way of example in the accompanying drawings in which:—

Figure 1 is a side view of thermoforming apparatus showing the machine at rest;

Figures 2 to 14 are side views similar to that of Figure 1 but showing the machine during the various parts of its operating cycle;

Figure 15 is a block diagram of apparatus according to the present invention;

Figure 16 is a diagram similar to Figure 15 but in more detail and with additional components;

Figure 17 is a typical graph of heater element output versus sheet temperature for a thermoplastic material, and

Figure 18 is a part of the apparatus shown in Figures 15 and 16 shown in more detail.

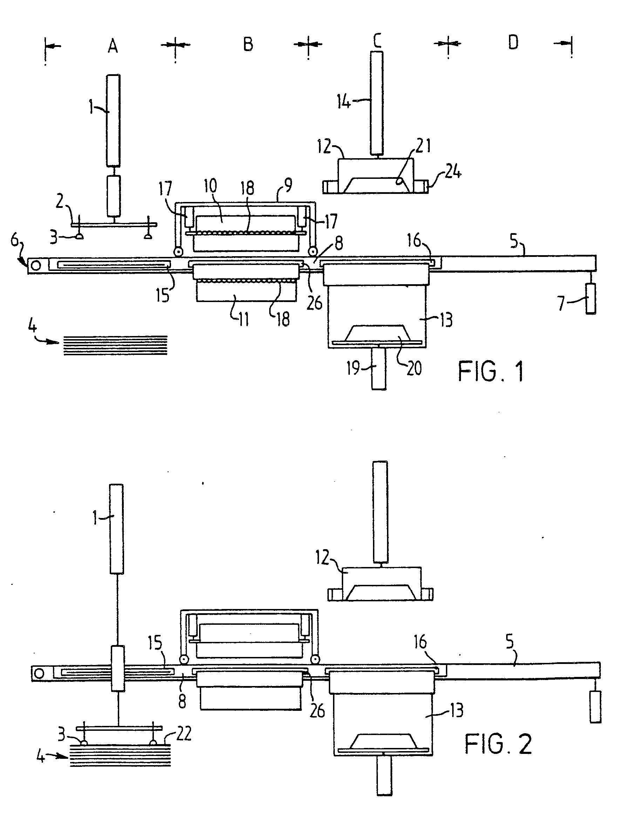

In Figure 1 there is shown thermoforming apparatus comprising a spaced parallel pair of beams (5), only one of which is seen in the drawing, which form a guide track on which is mounted a sheet transfer carriage (8) for reciprocation along the track by means (not shown). The beams (5) define four working stations namely a loading station A, a heating station B, a forming station C and an unloading station D. The sheet transfer carriage 8 extends over three of the four stations and is formed with sheet grippers (15, 26 and 16 respectively) corresponding to the three stations.

The loading station A comprises a two stage sheet loading unit (1) comprising two hydraulic or pneumatic rams linked end to end, which unit carries at its lower end arms (2) supporting suction grippers (3) by means of which a plastics sheet can be lifted from a stack (4) of such sheets and raised into a position where it can be gripped by grippers (15) on the carriage (8).

The heating station B comprises upper and lower heaters (10 and 11 respectively) each of which comprises a bank of infra-red quartz electric heater elements (18). In the interests of clarity the elements (18) are indicated in Figure 1 only. The lower heater (11) is fixed on the machine frame (not shown) but the upper heater is mounted on a carriage (9) for reciprocation along the beams (5) by means (not shown) and is mounted for vertical movement relative to the carriage (5) on hydraulic or pneumatic rams (17). The upper and lower heaters (10 and 11) comprise generally rectangular housings which when the upper heater is lowered will form a closed heating chamber in which a plastics sheet can be softened. During this period the plastics sheet is gripped between the peripheral portions of the respective housings. In addition the upper heater is formed with grippers (not shown) by means of which the sheets can be held in contact with the upper heater when they are out of contact one with the other. These grippers may be mechanical or pneumatic and may extend completely round the periphery of the heater housing so that with a plastics sheet engaged the heater forms a hermetically sealed chamber which can be partially evacuated if necessary to control sag in a heated plastics sheet.

The forming station C comprises a lower mould box (13) and an upper mould box (12) which carry male and female mould members (20 and 21 respectively) by means of which a heated sheet is moulded to the required shape usually with the aid of vacuum and/or fluid pressure. The lower mould box (13) is fixed to the machine frame but the mould member (20) is vertically moveable in the mould box (13) by means of an hydraulic or pneumatic ram (19). The upper mould box (12) and its associated mould member (21) is vertically moveable to bring the male and female mould members into its working position by means of an hydraulic or pneumatic ram (14). The upper mould box is surrounded by an independently vertically moveable clamping frame (24).

The beams (5) are pivoted about a horizontal axis at their end (6) and can be pivoted about the axis by means of an hydraulic or pneumatic ram (7) disposed at the ends of the beams (5) which are remote from the ends (6), that is to say at or adjacent to the unloading station D.

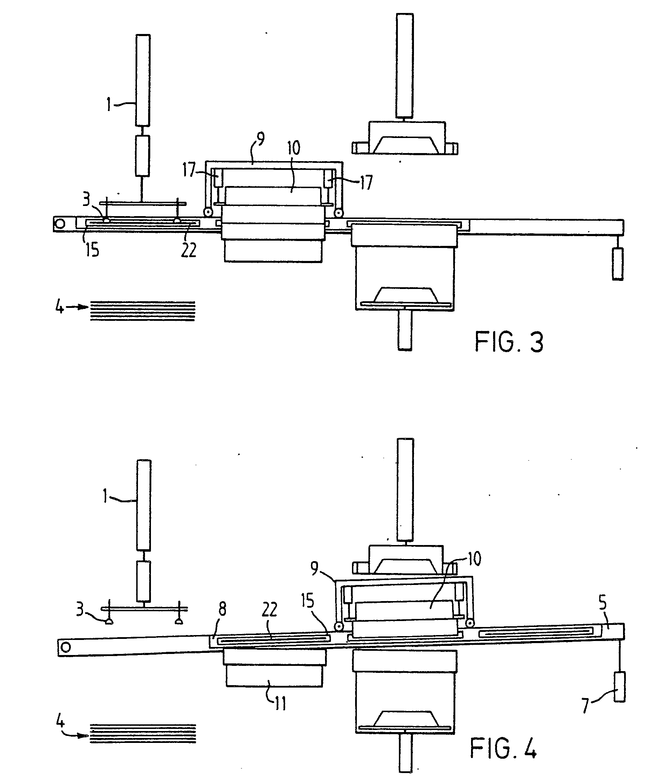

In Figure 1 of the drawings the machine is shown at rest. In Figure 2 the ram (1) has been fully extended so that the suction grippers (3) engage and grip the top sheet of plastics (22) on stack (4). In Figure 3 the ram (1) has been partly retracted to bring the sheet (22) into position for engagement by the grippers (15) on the carriage (8). Once the grippers (15) have engaged the sheet (22) the suction grippers (3) release the sheet. It will also be seen that the rams (17) have been extended to move the upper heater (10) into its lower position. In Figure 4 the ram (1) is retracted fully, the ram (7) is extended to raise the beams (5), and the carriage (8) is indexed forwards (to the right as seen in the drawing) so that the sheet (22) held by the grippers (15) is brought into the heating station B. At the same time the upper heater carriage (9) moves forward into the forming station C.

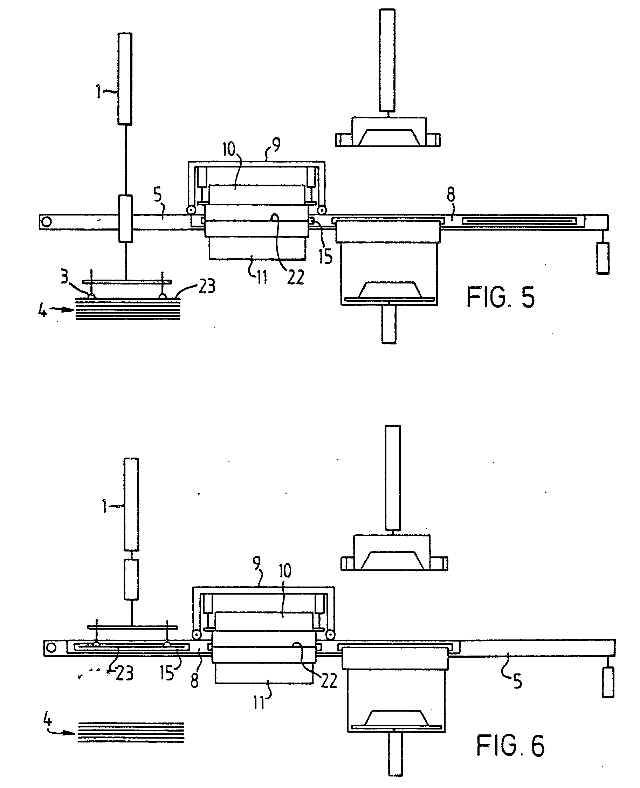

In Figure 5 the beams (5) have been lowered into their horizontal position, the ram (1) has been fully extended so that the grippers engage a further plastics sheet (23) on the stack (4), the upper heater has been raised, the carriage moved back to the heating station B after which the upper heater (10) is lowered so that the sheet (22) is gripped between the upper and lower heaters. The grippers (15) are then operated to release the sheet (22) and the heaters (10 and 11) are energised to soften sheet (22) retained therebetween. During this period the sheet may additionally be held by means of the grippers on the respective heaters.

Referring now to Figure 6 once the grippers (15) have released the sheet (22), the carriage (8) can be indexed rearwards into the position in which the grippers (15) can grip the sheet (23) which has been raised into position by a partial retraction of ram (1). At the same time the sheet (22) is gripped by the grippers (26) on the carriage (8) and the sheet is heated.

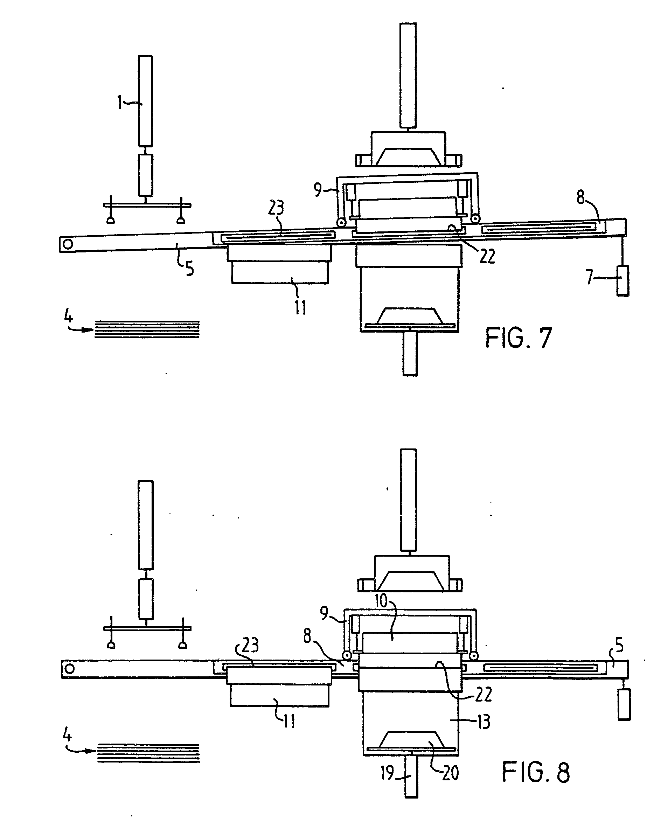

As shown in Figure 7 while the above described sheet loading sequence continues the lower heater is switched off. The beams are then raised so that the upper heater moves upwardly while still gripping the sheet (22). The sheet (22) is also held by the grippers (26). Thus, during heating and transferring of the plastics sheet from the heating station to the forming station, the sheet is gripped along two opposite edges by the grippers (26) whilst along its two edges extending transversely of the beams (5) it is gripped by vacuum grippers on the upper heater (10). It will be appreciated that during transfer of the heated sheet the motion of the carriage (9) will be synchronised with that of the carriage (8). The gripper carriage (8) is indexed forwards to bring the sheet (23) into the heating station and the upper heater (10) is indexed forwards along the guide track to bring the sheet (22) into the forming station.

Referring now to Figure 8 of the drawings the beams (5) have been lowered into the horizontal position, to bring the sheet (22) into engagement with the lower mould box (13) which is then made to grip the sheet for example by vacuum grippers (not shown). The sheet grippers on the upper heater (10) then disengage the sheet.

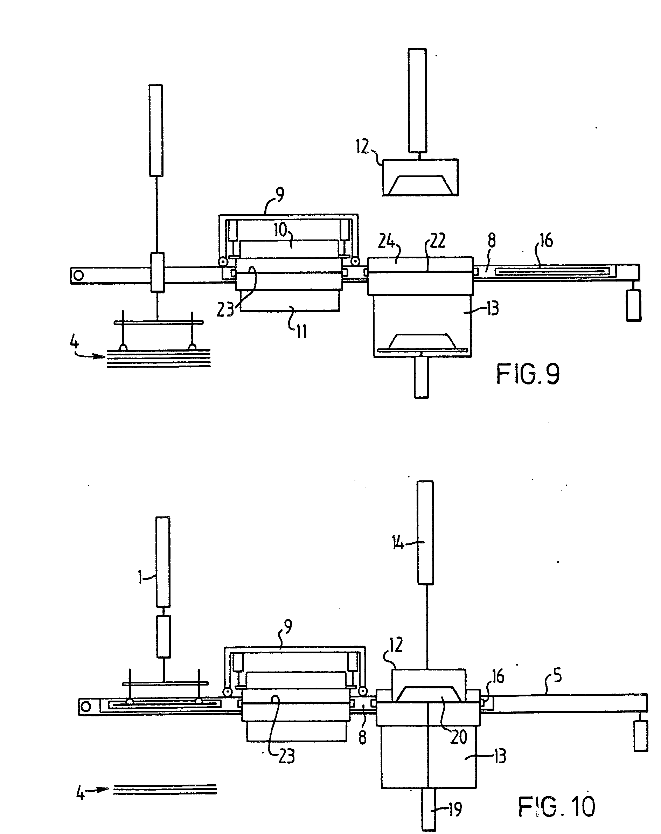

In Figure 9, upper heater (10) has been raised vertically from the position shown in Figure 8, and the carriage (9) has been indexed rearwards to a position above the lower heater (11) and the heater (10) lowered again to grip the sheet (23) between the upper and lower heaters in the manner previously described. Meanwhile the clamping frame (24) is moved vertically downwards by means (not shown) to clamp the marginal portion of the softened sheet (22) against the top of the mould box (13). The grippers (26) on the carriage (8) then release the sheet (22). It will be appreciated that during this period the sheet loading ram (1) is continuing through its operating sequence as previously described.

In Figure 10 the upper mould box (12) has been lowered and the male mould member (2) has been raised so that the softened plastics sheet is formed into the desired shape. The carriage (8) is indexed rearwardly and the grippers (16) on the carriage (8) are actuated to grip the formed moulding. During this period the sheet loading and heating operations continue as previously described.

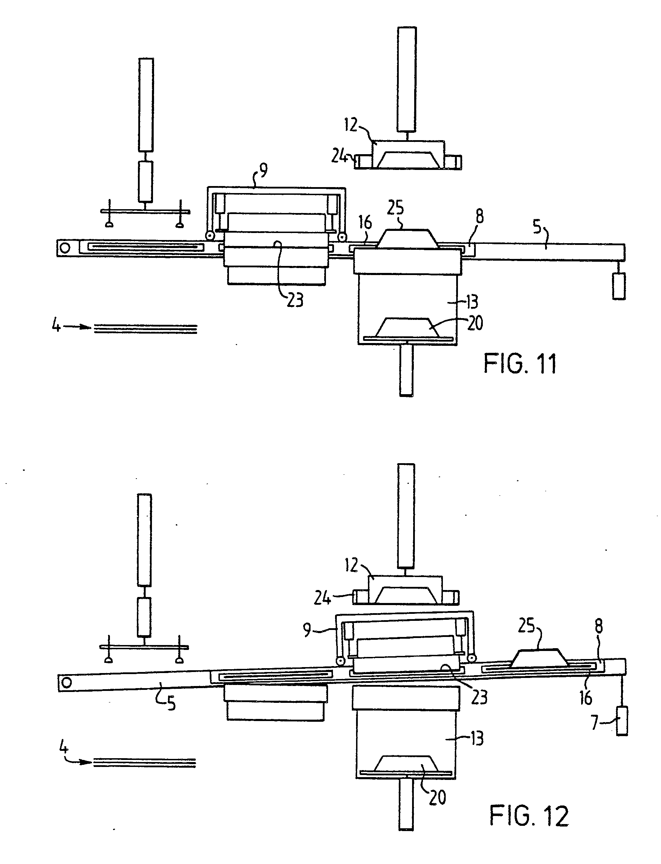

Referring to Figure 11 the upper mould box (12) and the clamping frame (24) are retracted upwardly and the member (20) is retracted downwardly to leave the formed moulding (25) held by the grippers (16). The vacuum grippers on the mould box (13) are deactivated. During this period the sheet loading and heating operations continue as previously described.

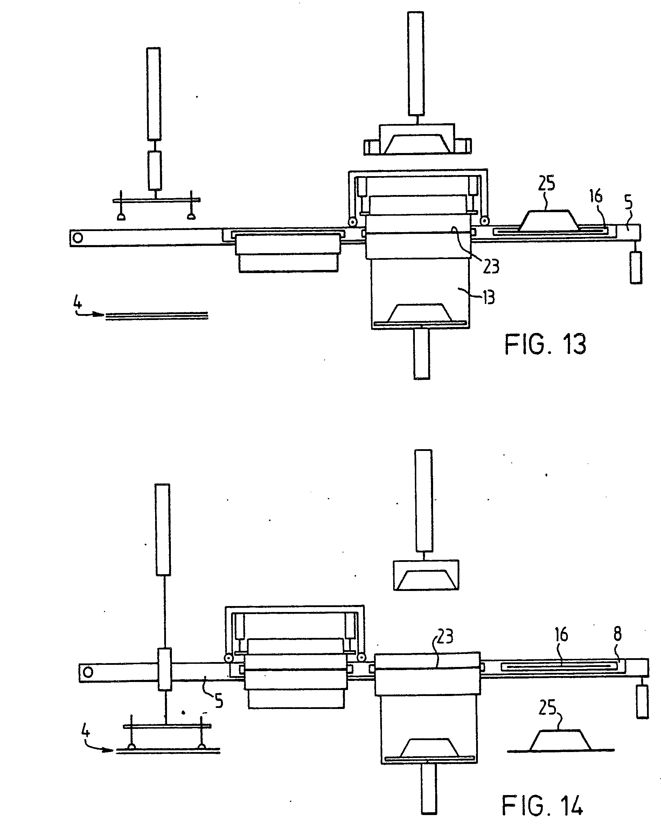

In Figure 12 the beams (5) are shown raised and the gripper carriage (8) is shown indexed forwards to bring the finished moulding (25) into the unloading station D. The previously described loading, heating and forming sequences for subsequent plastics sheets meanwhile progress through the various stages described above.

Figure 13 shows the position with the beams (5) lowered, the mould box (13) vacuum grip actuated to grip the sheet (23) and the vacuum grip of the heater (10) de-activated so that the upper heater can be retracted to the heating station.

Figure 14 shows that the grippers (16) on carriage (8) have released the finished moulding (25) and that the cycle of operations on subsequent sheets has progressed one step. The cycle of operations then continues as previously shown so that each sheet is moulded as described for the sheet (22).

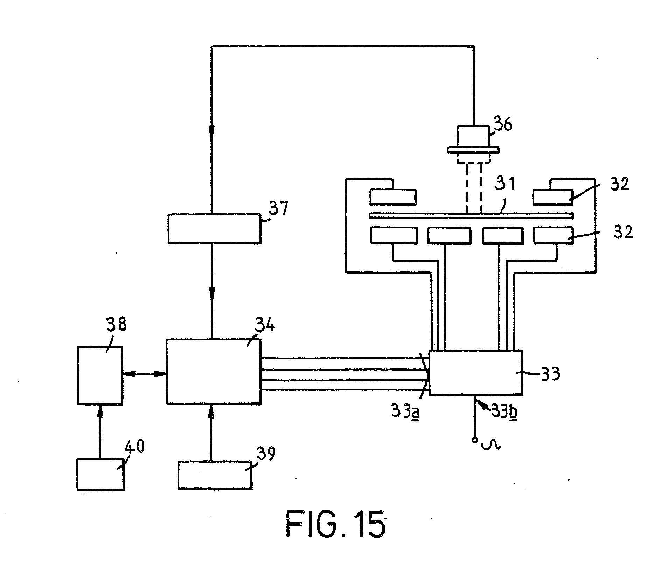

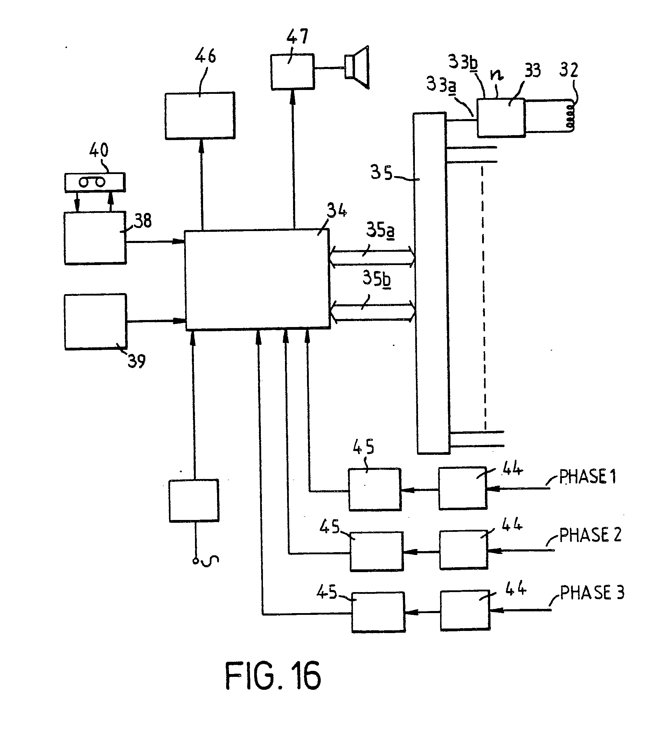

Referring now to Figures 15 to 18 of the drawings, Figure 15 shows a sheet (31) of thermoplastics material located between two arrays of infrared quartz heating elements (32). Each heating element (32) is connected to a triac (33), which has two inputs (33a and 33b); each input (33a) being connected to a microprocessor (34), via a latching and decoding circuit (35) and address and data buses (35a, 35b) and each input (33b) being connected to one side of a.c. mains power (Figure 16). The other side of the a.c. mains supply is connected to one end of each heating element (32). A pyrometer (36) is located opposite the sheet (1) (Figure 15) for monitoring the temperature of the sheet, the pyrometer being connected to the microprocessor (34) via an interface (37) which amplifies the pyrometer (36) signal to facilitate use with the microprocessor (34) (Figure 15).

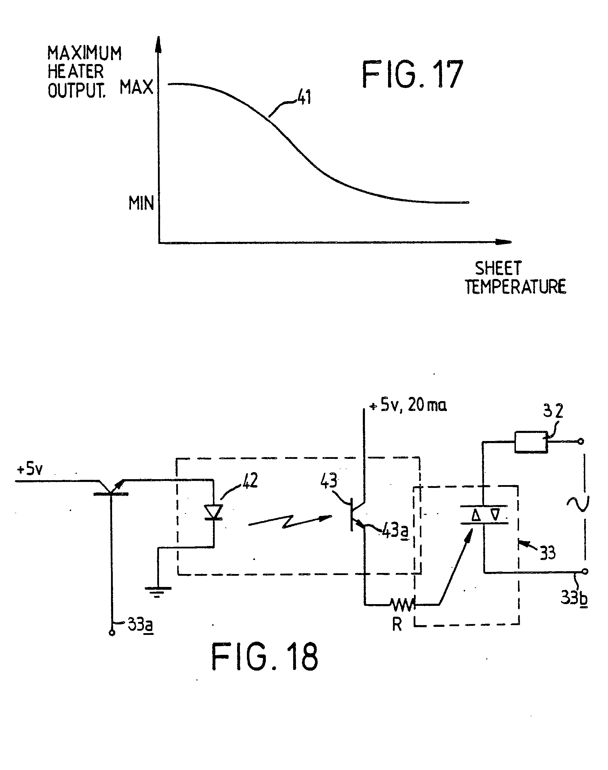

The microprocessor (34) is connected to a data store (38) which contains a preprogrammed set of data corresponding to the temperature response (41) of the particular thermoplastic material being formed for maximum heater output initially applied as shown in Figure 17. It will be readily understood that experiments are performed on each thermoplastic material used in thermoforming to determine the particular temperature/ heater output response curve. Once these response curves are obtained the data is then transferred to a data store such as a cassette tape or a cartridge or disc. The microprocessor (34) may also be controlled directly from a keyboard terminal (39) or from data stored in a tape cassette (40), or from a disc drive or cartridge (not shown).

In use, in response to data entered from the keyboard (39) or from stored data in the store (38), the microprocessor (34) switches on the triacs (33) to connect the heating elements (32) to a.c. mains power in accordance with the preprogrammed data, and the pattern of elements (32) powered is in accordance with the particular article to be formed. The heating elements (32) are of low thermal inertia infra-red quartz type and consequently they heat up rapidly to maximum power which is applied to the sheet (32). As the heating elements (32) are driven at maximum output the temperature of the sheet (31) rises rapidly so that if applied for too long the sheet (31) would begin to degrade. To avoid the sheet degrading yet to supply enough heat to the sheet to cause it to soften to permit thermoforming in the minimum of time, the pyrometer (36) monitors the temperature rise and sends signals via the interface (37) to the microprocessor (34). These signals cause further execution of the data corresponding to the preprogrammed temperature response curve (41) for the particular thermoplastic material being heated.

The microprocessor provides further output signals in accordance with data corresponding to this curve (41) which reduces the period for which the triacs (33) are switched on, hence the heating power applied to the heating elements (32) is consistent with the thermoplastic sheet (31) not degrading but is sufficient to heat the sheet (31) to be thermoformed.

The microprocessor output signal which controls the switching of each triac (33) via the latching and decoding circuit (35) is in the form of an oscillating signal with a frequency of 50 Hz and when the pyrometer (36) sends a signal to the microprocessor (34) the period for which the triacs (33) are turned on is reduced in accordance with the stored data corresponding to curve (41). For example the period may be 'chopped' so that only 40 cycles or 10 cycles switch the triac on for 80% or 20% of the time respectively, the triacs (33) being switched off for longer as the temperature of the sheet rises (Figure 17).

The circuit shown in Figure 18 is reference (33) in Figures 15 and 16 but shown in more detail. The output (33a) to the microprocessor (34) is optically isolated using a light emitting diode (42) and phototransistor (43), and the output (43a) of the phototransistor is connected to the triac (33). This circuit applies a zero-switching technique which means that the microprocessor signal is split at the zero crossover point to provide accurate control of the power applied to the heating elements, unlike the conventional heating circuit in which the power cycle can be interrupted at any point in the cycle to provide less rigorous power control.

The control circuit also includes rectifying means (44) and analogue to digital (A/D) converting means (45) connected between each phase of a 3-phase supply and the microprocessor (34) as shown in Figure 16.

It will be understood that several modifications may be made to the apparatus as shown in Figures 15 and 16. For example a digital display (46) could be connected to the microprocessor (34) to display values of sheet temperature or the like and an alarm unit (47) could also be connected to the microprocessor (34) to indicate the failure of a heating element or any other component. The microprocessor (34) is preferably of the Z80 8-bit type although other microprocessor could be used. The pyrometer (36) may be replaced by another type of pyrometer which includes an amplifier thereby dispensing with the need for interface (37), however this alternative pyrometer is also more expensive.

Further advantages of the present embodiment are that the heating program for each particular thermoplastic material can be quickly and easily changed, giving flexibility of production. Only one heating stage is required for each thermoplastic material independent of the thickness of the material since the heating circuit supplies just enough heat to soften but not melt the material, and the heating operation is more efficient in the utilisation of heat energy.

## Claims

1. Apparatus for thermoforming sheet plastics material, of the kind having a heating station and a forming station arranged in line, means for conveying sheets between the heating and forming stations and upper and lower heaters in the heating station, characterised by means (9) for moving one of the heaters (10, 11) between the heating station (B) and the forming station (C), sheet gripping means on the movable heater (10), the movable heater (10) being arranged to travel with the heated sheet (22) during its conveyance between the heating and forming stations (B, C), and the sheet gripping means on the movable heater (10) being arranged to cooperate during the conveyance of the sheet (22) with sheet gripping means (26) on the means (8) for conveying the sheets (22) between the heating and forming stations (B, C) whereby during its conveyance the sheet (22) can be gripped around substantially the whole of its periphery to prevent shrinkage of the sheet.

2. Thermoforming apparatus according to claim 1, characterised in that the upper heater (10) is the movable heater.

3. Thermoforming apparatus according to claim 1, or claim 2, characterised in that the upper heater (10) is in the form of a chamber which is adapted to be closed by the sheet (22), the arrangement being such that the air pressure in the chamber can be varied to control sag in the sheet.

4. Thermoforming apparatus according to claim 3, characterised by means for sealing the marginal portion of the sheet against the heater chamber, and in that the sheet sealing means and the sheet gripping means (26) are combined in a continuous vacuum seal.

5. Thermoforming apparatus according to any preceding claim, characterised by a sheet loading station (A), an unloading station (D) and in that the means (8) for conveying the sheet (22) to be formed between the stations (A, B, C, D) comprises a guide track (5) extending between the stations, a carriage (8) on the guide track, sheet gripper means (15, 26, 16) on the carriage, the carriage (8) being movable between adjacent stations whereby the sheet can be moved step-wise between the stations.

6. Thermoforming apparatus according to claim 5, characterised in that the guide track (5) is pivoted at one end (6) for vertical movement, means (7) being provided for moving the guide track about its pivot to provide clearance to enable the sheet to be advanced between successive stations.

7. Thermoforming apparatus according to any preceding claim, characterised by means for controlling the heaters (10, 11) for applying heat at a given level to the material (22) from a heat source of low thermal inertia, means for sensing the temperature of the sheet material and means for successively or continuously reducing the level of heat applied to the material as the temperature of the material rises.

8. Thermoforming apparatus according to claim 7, characterised in that the heat sensing means is connected to a microprocessor control unit (34) and said heating control means is connected to the microprocessor control unit, said microprocessor control circuit have data storage means connected therewith, and data corresponding to a predetermined temperature response of the material being heated stored in said storage means whereby, in use, the heating of said array of elements and the monitoring of the temperature is carried out in accordance with said predetermined temperature response and the monitored temperature.

9. Thermoforming apparatus according to claim 7 or claim 8, characterised by infra-red quartz electric heaters (32) of low thermal inertia.

10. Apparatus according to any one of claims 7 to 9, characterised in that the heat sensing means is a non-contact infra-red pyrometer.

11. Apparatus according to any one of claims 7 to 10, characterised in that the heating control devices are triacs.

12. A method of thermoforming sheet plastics material of the kind comprising heating a plastics sheet in a heating station, conveying the plastics sheet to a forming station and forming the plastics sheet in the forming station, characterised by the step of heating the sheet (31) while it is being conveyed between the heating and forming stations (B, C respectively) and by the step of gripping the sheet (31) around substantially the whole of its periphery while it is being conveyed between the heating and forming station.

13. A method according to claim 12, characterised by applying heat at a given level to the sheet material (31) from a heat source (32) of low thermal inertia and successively or continuously reducing the level of heat applied to the sheet material as the temperature of the material rises.

14. The method according to claim 12 or claim 13, characterised in that the heat source comprises one or more infra-red quartz electric resistance heaters (32).

15. The method according to any one of claims 12 to 14, characterised by continuously monitoring the temperature of the sheet material at at least one location e.g. by means of an optical pyrometer (36).

16. The method according to any one of claims 12 to 15, characterised by monitoring the mains voltage to the heating source and applying compensation if necessary to avoid unintended fluctuations in the level of heating energy applied to the sheet material (31).

17. The method according to any one of claims 12 to 16, characterised by initially applying maximum heat available to the sheet material (31), monitoring the temperature of the sheet material, comparing the monitored temperature of the sheet material with the temperature of a predetermined temperature response (41) of the same sheet material, and controlling the heat applied to the sheet material in accordance with the predetermined temperature response and in accordance with the monitored temperature so that the thermoplastic sheet material is brought into a suitable condition to be thermoformed.

18. The method according to claim 17, characterised by sensing when the sheet material (31) is suitable for thermoforming and removing the material from the applied heat.

**Patentansprüche**

1. Gerät für die Wärmeumformung von bahnförmigen Kunststoffmaterial in der Ausführungsform mit Erwärmungsstation und Umformstation in Reihenanordnung, Mitteln für den Transport der Bahnen zwischen der Erwärmungs- und der Umformstation und Heizkörpern oben und unten in der Erwämungsstation gekennzeichnet durch Mittel (9) für das Verstellen eines der Heizkörper (10, 11) zwischen der Erwärmungsstation (B) und der Umformstation (C) sowie Greifervorrichtungen für die Bahnen auf dem ortsverändlichen Heizkörper (10), wobei der ortsveränderliche Heizkörper (10) so angeordnet ist, daß er gleichzeitig mit der erwärmten Bahn (22) zwischen der Erwärmungs- und der Umformstation (B, C) verfahren wird und die Bahngreifvorrichtungen am ortsveränderlichen Heizkörper (10) so ausgeführt sind, daß sie mit Bahngreifern (26) an der Vorrichtung (8) für den Transport der Bahnen (22) zwischen der Erwärmungs- und Umformstation (B, C) zusammenwirken wodurch die Bahn (22) während des Transportes zur Verhinderung einer Schrumpfung der Bahn im wesentlich über den gesamten Umfang gefaßt gehalten werden kann.

2. Wärmeumformgerät gemäß Anspruch 1, dadurch gekennzeichnet, daß der obere Heizkörper (10) der bewegliche Heizkörper ist.

3. Wärmeumformgerät gemäß Anspruch 1 oder Anspruch 2, dadurch gekennzeichnet, daß der obere Heizkörper (10) in Form einer Kammer ausgebildet ist, die so angepaßt ist, daß sie durch die Bahn (22) verschlossen wird, wobei die Anordnung so ist, daß sich der Luftdruck in der Kammer zur Verhinderung eines Durchsackens der Bahn verändern läßt.

4. Wärmeumformgerät gemäß Anspruch 3, gekennzeichnet durch Mittel für das Abdichten des Randteiles der Bahn gegen die Kammer für das Erwärmen sowie dadurch, daß die Bahnabdichtungsmittel und die Bahngreifvorrichtungen (26) in einer durchgehenden Vakuumdichtung kombiniert sind.

5. Wärmeumformgerät gemäß einem der vorhergehenden Ansprüche, gekennzeichnet durch eine Bahnaufgabestation (A), eine Entnahmestation (D), sowie dadurch, daß die Mittel (8) für den Transport der umzuformenden Bahn (22) zwischen den Stationen (A, B, C, D) aus einer sich zwischen den Stationen erstreckenden Führungsschiene (5), einem auf der FÜhrungsschiene laufenden Schlitten (8) sowie Bahngreifervorrichtungen (15, 26, 16) auf dem Schlitten besteht, wobei der Schlitten (8) zwischen hintereinanderliegenden Stationen verstellbar ist und sich die Bahn auf diese Weise schrittweise zwischen den Stationen bewegen läßt.

6. Wärmeumformgerät gemäß Anspruch 5, dadurch gekennzeichnet, daß die Führungsschiene (5) an einem Ende (6) für eine Vertikalbewegung schwenkbar gelagert ausgeführt ist, wobei Mittel (7) für das Verstellen der Führungsschiene um ihre Schwenkachse vorgesehen sind, so daß ausreichend Raum für den Weitertransport der Bahn zwischen aufeinanderfolgenden Stationen entsteht.

7. Wärmeumformgerät gemäß einem der vorhergehenden Ansprüche, gekennzeichnet durch Mittel für die Steuerung der Heizkörper (10, 11) für die Wärmebeaufschlagung des Materiales (22) in vorgegebener Höhe unter Verwendung einer Wärmequelle mit geringer Wärmeträgheit, Mittel für die Bestimmung der Temperatur des bahnförmigen Materials sowie Mittel für die allmähliche bzw. kontinuierliche Reduktion der Wärmebeaufschlagung des Materiales mit steigender Materialtemperatur.

8. Wärmeumformgerät gemäß Anspruch 7, dadurch gekennzeichnet, daß die Mittel für die Bestimmung der Temperatur an eine Miktoprozessor-Steuereinheit (34) angeschlossen sind, die besagte Steuerung der Heizkörper an die Mikroprozessorsteuerung angeschlossen ist, die besagte Mikroprozessor-Steuerschaltung mit einer angeschlossenen Datenspeichereinheit ausgestattet ist und Daten über ein vorgegebenes Temperaturverhalten des Materials das erwärmt wird, in besagtem Datenspeicher gespeichert werden, wodurch im Einsatz die Erwärmung der besagten Heizelementanordnung und die Überwachung der Temperatur gemäß dem besagten vorgegebenen Temperaturverhalten und der überwachten Temperatur erfolgt.

9. Wärmeumformgerät gemäß Anspruch 7 oder 8, gekennzeichnet durch elektrische Infrarot-Quarz-Heizelemente (32) mit niedriger Wärmeträgheit.

10. Gerät gemäß einem der Ansprüche 7 bis 9, dadurch gekennzeichnet, daß es sich bei den Mitteln für die Temperaturbestimmung um kontaktlose Infrarot-Pyrometer handelt.

11. Gerät gemäß einem der Ansprüche 7 bis 10, dadurch gekennzeichnet, daß es sich bei den Heizkörper-Steuerungen um bidirektionale Wechselstrom-Thyristoren handelt.

12. Verfahren für die Wärmeumformung von bahnförmigen Kunststoffmaterial der Ausführungsform mit Erwärmung einer Kunststoffbahn in einer Erwärmungsstation, des Transportes der Kunststoffbahn zu einer Umformstation und der Verformung der Kunststoffbahn in der Umformstation, gekennzeichnet durch die schrittweise Erwärmung der Bahn (31) während ihres Transportes zwischen den Erwärmungs- und Umformstationen (B bzw. C) und durch den Schritt des Greifens der Bahn (31) im wesentlichen über ihren gesamten Umfang während des Transportes zwischen den Erwärmungs- und Umformstationen.

13. Verfahren gemäß Anspruch 12, gekennzeichnet durch die Wärmebeaufschlagung des bahnförmigen Materiales (31) in vorgegebener Höhe unter Verwendung einer Wärmequelle (32) mit niedriger Wärmeträgheit mit allmählicher bzw. kontinuierlicher Reduktion der Wärmebeaufschlagung des bahnförmigen Materials mit steigender Temperatur des Materials.

14. Verfahren gemäß Anspruch 12 oder Anspruch 13, dadurch gekennzeichnet, daß es sich bei der Wärmequelle um einen oder mehrere elektrische Infrarot-Quarz-Widerstandsheizkörper (32) handelt.

15. Verfahren gemäß einem der Ansprüche 12 bis 14, gekennzeichnet durch die kontinuierliche Überwachung der Temperatur des bahnförmigen Materials an wenigstens einer Stelle, z.B. mit einem optischen Pyrometer (36).

16. Verfahren gemäß einem der Ansprüche 12 bis 15, gekennzeichnet durch Überwachung der Netzspannungsversorgung der Wärmequelle und gegebenenfalls der Kompensierung zur Vermeidung unbeabsichtigter Schwankungen in der dem bahnförmigen Material (31) zugeführten Wärmeenergie.

17. Verfahren gemäß einem der Ansprüche 12 bis 16, gekennzeichnet durch eine erste Beaufschlagung des bahnförmigen Materials (31) mit maximaler Wärme, Überwachung der Temperatur des bahnförmigen Materials, Vergleich der festgestellten Temperatur des bahnförmigen Materials mit der Temperatur für ein vorgegebenes Temperaturverhalten (41) des besagten bahnförmigen Materials und Steuerung der dem bahnförmigen Material zugeführten Wärme gemäß diesem vorgegebenen Temperaturverhalten und gemäß der vorgegebenen Temperatur, so daß das thermoplastische, bahnförmige Material in einen geeigneten Zustand für die Wärmeumformung versetzt wird.

18. Verfahren gemäß Anspruch 17, gekennzeichnet, durch die Ermittlung des Zeitpunktes zu dem das bahnförmige Material (31) in einem geeigneten Zustand für die Wärmeumformung ist und das Entfernen des Materials aus dem Erwärmungsbereich.

**Revendications**

1. Appareil à façonnage à chaud des feuilles de matière plastique, du modéle comportant un poste de chauffe et un poste de façonnage disposés en ligne, des moyens de transporte des feuilles entre les postes de chauffe et de façonnage ainsi que des dispositifs supérieurs et inférieurs de chauffe au poste de chauffe, caractérisé par des moyens (9) de déplacement d'un des dispositifs de chauffe (10, 11) entre le poste de chauffe (B) et le poste de façonnage (C), des moyens de prise de feuille sur le dispositif amovible de chauffe (10), le dispositif amovible de chauffe (10) étant agencé pour se déplacer avec la feuille chauffée (22) lors de son déplacement entre les postes de chauffe et de façonnage (B, C) et les moyens de la prise de feuille du dispositif amovible de chauffe (10) étant agencés lors du déplacement de la feuille (22) avec des moyens de prise (26) situés sur les moyens de transport (8) de feuilles (22) entre les postes de chauffe et de façonnage (B, C) selon lesquels lors de son transport la feuille (22) est retenue au besoin essentiellement sur tout son pourtour de manière à éviter la contraction de la feuille.

2. Appareil de façonnage à chaud selon la 1ère revendication, caractérisé en ce que le dispositif supérieur de chauffe (10) est le dispositif amovible.

3. Appareil de façonnage à chaud selon la 1ère ou 2ème revendication, caractérisé en ce que le dispositif supérieur de chauffe (10) est sous forme d'une chambre agencée pour être fermée par la feuille (22), l'agencement étant tel à permettre le réglage de la pression d'air dans la chambre de manière à contrôler l'affaissement accusé par la feuille.

4. Appareil de façonnage à chaud selon la 3ème revendication, caractérisé par des moyens d'étanchéification de la zone marginale de la feuille contre la chambre de chauffe, lesdits moyens d'étanchéification de la feuille et les moyens de retenue de la feuille (26) étant combinés en une étanchéité continue à la dépression.

5. Appareil de façonnage à chaud selon l'une ou l'autre des revendications ci-avant, caractérisé par un poste de chargement de feuille (A), un poste de décharge (D), et en ce que les moyens (8) de transport de la feuille (22) à façonner entre les postes (A, B, C, D) comporte une voie de guidage (5) située entre les postes, un chariot (8) sur la voie de guidage, des moyens de retenue de la feuille (15, 26, 16) sur le chariot, le chariot (8) se déplaçant entre les postes adjacents, admettant le déplacement pas-à-pas de la feuille entre les postes.

6. Appareil de façonnage à chaud selon la 5ème revendication, caractérisé en ce que la voie de guidage (5) pivote en sens vertical depuis une extrémité (6), des moyens (7) étant prévus pour déplacer la voie de guidage sur son pivot de manière à assurer un dégagement admettant l'avance de la feuille entre les postes successifs.

7. Appareil de façonnage à chaud selon une ou l'autre des revendications ci-avant, caractérisé par des moyens régulateurs des dispositifs de chauffe (10, 11) à un certain niveau de la matière (22) depuis une source de chaleur de faible inertie thermique, des moyens de captage de la température de la matière de la feuille et des moyens de réduction successive ou en continu du niveau de chaleur appliqué à la matière au fur et à mesure de la montée en température de la matière.

8. Appareil de façonnage à chaud selon la 7ème revendication, caractérisé en ce que les moyens de captage de chaleur sont raccordés à un dispositif régulateur à microprocesseur (34) lesdits moyens régulateurs de chaleur étant raccordés au dispositif microprocesseur, le circuit dudit dispositif étant muni de moyens à mémoire avec raccord, et comportant des données correspondant à une réponse selon température programmée de la matière façonnée, programmée dans lesdits moyens de mémoire, permettant ainsi, en exploitation, la chauffe de la série d'éléments et le monitorage de la température en conformité avec ladite réponse ci-avant de température ainsi que la température au monitorage.

9. Appareil de façonnage à chaud selon la 7ème ou 8ème revendication, caractérisé par des dispositifs de chauffe infra-rouge au quartz (32) de faible inertie.

10. Appareil de façonnage à chaud selon l'une ou l'autre de la 7ème à la 9ème revendication, caractérisé en ce que les moyens de captage de chauffe sont sous forme d'une pyromètre infra-rouge sans contacts.

11. Appareil de façonnage à chaud selon l'une ou l'autre de la 7ème à la 10ème revendication, caractérisé en ce que les dispositifs régulateur de chauffe sont sous forme de thyristors transistorisés (triacs).

12. Procédé de façonnage à chaud des feuilles de matières plastiques de genre comportant la chauffe d'une feuille de plastique dans un poste de chauffe, le déplacement de la feuille de plastique vers un poste de façonnage et le façonnage de la feuille de plastique dans le poste de façonnage, caractérisé par l'étape de chauffe de la feuille (31) lors de son transport entre les postes de chauffe et de façonnage (B, C respectivement) et l'étape de prise de la feuille (31) essentiellement sur tout son pourtour lors de son transport entre les postes de chauffe et de façonnage.

13. Procédé selon la 12ème revendication, caractérisé par l'application de chaleur à un certain niveau de la matière de la feuille (31) depuis une source de chaleur (32) de faible inertie thermique, avec réduction successive ou en continu du niveau de chaleur appliqué à la matière de la feuille au fur et à mesure de la montée en température de la matière.

14. Procédé selon la 12ème ou la 13ème revendication, caractérisé en ce que la source de chaleur comporte une ou plusieurs résistances électriques à l'infrarouge en quartz pour la chauffe (32).

15. Procédé selon l'une ou l'autre de la 12ème à la 14ème revendication, caractérisé par le monitorage en continu de la température de matière de la feuille en un seul emplacement p.ex. par l'intermédiaire d'un pyromètre optique (36).

16. Procédé selon l'une ou l'autre de la 12ème à la 15ème revendication, caractérisé par le monitorage continu de la tension de secteur apportée à la source de chauffe et la mise en oeuvre d'une compensation au besoin pour éliminer les variations intempestives du niveau d'énergie de chauffe appliqué à la matière de la feuille (31).

17. Procédé selon l'une ou l'autre de la 12ème à la 16ème revendication, caractérisé en premier lieu par l'application de la chaleur maximale disponible à la matière de la feuille (31), le monitorage de la température de matière de la

17

0 063 462

18

feuille, la comparaison de la température de matière de feuille ainsi obtinue avec la température programmée de réponse (41) à la mème matière de feuille et par le controle de la chaleur appliquée à la matière de la feuille en conformité avec la réponse de température programmée et en conformité avec la température relevée au monitorage de manière à assurer la mise en condition appropriée de la matière de feuille pour en assurer son façonnage à chaud.

18. Procédé selon la 17ème revendication, caractérisé par le captage du moment de condition appropriée de la matière de feuille (31) pour la façonnage à chaud ainsi que le déplacement de la matière depuis la chaleur appliquée.

FIG. 1

FIG. 2

0 063 462

FIG. 3

FIG. 4

FIG. 5

FIG. 6

FIG. 7

FIG. 8

FIG.9

FIG.10

FIG. 11

FIG. 12

FIG. 13

FIG. 14

FIG. 15

FIG. 16

**0 063 462**

FIG.17

MAXIMUM
HEATER
OUTPUT.

MAX

MIN

SHEET
TEMPERATURE

FIG. 18

+5v, 20 ma

32

+5v

42

43

43a

33

33a

R

33b

10